# EUROPEAN PATENT APPLICATION

(11) **EP 4 775 515 A1**
(43) Date of publication of application: **15.07.2026**
(21) Application number: 25315006.4
(22) Date of filing: 08.01.2025
(51) Int. Cl.: B65G 51/12, B65G 51/24, B65G 51/32, B65G 51/40

(54) **PNEUMATIC DELIVERY SYSTEM AND METHOD FOR OPERATING THE SYSTEM**

(71) Applicant: Swisslog France SAS, 92156 Suresnes Cedex (FR)
(72) Inventor: Zidane, Yanis, 18200 Saint-Amand-Montrond (FR)
(74) Representative: Wallinger Ricker Schlotter Tostmann

(57) **Abstract**

A pneumatic delivery system for transporting at least one package (B1, B2, B3) in a flow direction comprises a passage system, a sending station (11, 12, 13), an arrival station (21, 22, 23). The passage system comprises a first transit station (100) comprising a first chamber (130) and a first compressor (140). The passage system comprises at least one further transit station (200) arranged between said first transit station and said arrival station, comprising a further chamber (230) and a further compressor (240). The first compressor is configured for selectively sucking air for pulling the package in flow direction and discharging air for pushing the package further in flow direction and/or the further compressor is configured for selectively sucking air for pulling the package in flow direction and discharging air for pushing the package further in flow direction. The invention also refers to a method for operating the system.

## Description

The present invention relates to a pneumatic delivery system for transporting at least one package, and to a method for operating the pneumatic delivery system.

Pneumatic delivery systems are well known in the art.

The object of the present invention is to improve a pneumatic delivery system and/or operation of a pneumatic delivery system.

This object is achieved in particular by a pneumatic delivery system with the features of claim 1 and a method with the features of claim 9 for operating a pneumatic delivery system described herein, respectively. Subclaims refer to advantageous embodiments.

According to an aspect of the present invention a pneumatic delivery system is used or operated, respectively, for transporting one or more packages, in a preferred embodiment at least two packages at the same time, in a flow direction, or configured for this purpose and/or (for carrying out) a method described herein, respectively. Preferably, the pneumatic delivery system is a unidirectional system or transports packages only from sending station(s) through transit stations to arrival station(s) and not vice versa or is configured for this purpose, respectively.

According to an embodiment of the present invention the pneumatic delivery system comprises a passage system. According to an embodiment said passage system comprises, preferably in addition to features or elements, respectively, described hereinafter, one or more tubes or pipelines, respectively. Accordingly, the pneumatic delivery system may be a pneumatic tube transport ("PTT") or network or capsule pipeline (system), respectively. Preferably said passage system, preferably the pneumatic delivery or tube (transport) or network (system), is air-sealed or airtight, respectively, at least temporarily and/or between a package within the system and the transit station pulling or pushing said package, respectively.

According to an embodiment of the present invention the pneumatic delivery system comprises at least one sending station, preferably at least two sending stations, preferably more than two sending stations, (configured or used, respectively) for introducing the (single) package(s). Preferably the sending station(s) is/are (each) configured for introducing one package at a time.

According to an embodiment of the present invention the pneumatic delivery system comprises at least one arrival station, preferably at least two arrival stations, preferably more than two arrival stations, downstream (with regard to the flow direction) of said sending station(s), wherein said arrival station(s) is/are configured or used, respectively, for receiving a package (introduced via (one of) the sending station(s)) from the passage system. Preferably the arrival station(s) is/are (each) configured for receiving one package at a time. The flow direction, respectively, is defined from the sending station(s) to(wards) the arrival station(s).

According to an embodiment of the present invention the passage system connects said sending station(s) and arrival station(s), preferably such that packages can be transported or guided, preferably pulled and/or pushed, from said sending station(s) (in)to arrival station(s), respectively. Pushing a package towards an arrival station in the sense of the present invention means or includes, respectively, pushing said package in the flow direction or in the direction towards said arrival station, respectively. It can include pushing said package into said arrival station but does not necessarily include that.

According to an embodiment of the present invention the passage system comprises a first transit station connected to the sending station(s), wherein said first transit station preferably is arranged downstream of the sending station(s) and/or comprises a first chamber (configured or used, respectively) for temporarily storing a package (introduced via (one of) the sending station(s)). Preferably the first transit station is configured for (temporarily) storing one package at a time. "First" as used herein does not imply any specific position, to the contrary one or more other transit stations may be arranged between the sending station(s) and said first transit station.

According to an embodiment of the present invention the first transit station (further) comprises a first compressor which sucks air (for) pulling the package in flow direction, preferably into the first chamber, or is configured or used or operated for this purpose, respectively.

According to an embodiment of the present invention the passage system comprises one or more further transit station(s each) arranged between the first transit station and the arrival station(s), wherein the or each transit station preferably is arranged downstream of the first transit station. Preferably the first transit station and the further transit station(s) are arranged in line or series, respectively. According to an embodiment of the present invention the further transit station(s each) comprise(s) a further chamber (configured or used, respectively) for temporarily storing a package (introduced via (one of) the sending station(s)). Preferably the further transit station(s each) is/are (each) configured for (temporarily) storing one package at a time.

According to an embodiment of the present invention the further transit station(s each) (further) comprise(s) a further compressor which discharges air (for) pushing the package further in flow direction or in direction towards said arrival station(s), respectively, preferably out of said further chamber, or is configured or used or operated for this purpose, respectively.

According to an embodiment of the present invention the first compressor of the first transit station selectively, preferably alternatingly,
- sucks air (for) pulling the package in flow direction, preferably into the first chamber; and
- discharges air (for) pushing the package further in flow direction or in direction towards said arrival station(s), respectively, preferably out of the first chamber;
or is configured or used or operated for this purpose, respectively. Preferably the first compressor may additionally
- discharge air (for) decelerating the package arriving at and/or in the first chamber; and/or
- suck air (for) decelerating the package after it has left the first chamber;
or be configured or used or operated for this purpose, respectively.

According to an embodiment of the present invention additionally or alternatively, the further compressor of the further transit station(s each) selectively, preferably alternatingly,
- sucks air (for) pulling the package in flow direction, preferably into the further chamber of said further transit station; and
- discharges air (for) pushing the package further in flow direction or in direction towards said arrival station(s), respectively, preferably out of said further chamber;
or is configured or used or operated for this purpose, respectively. Preferably the further compressor of the or at least one of the further transit station(s) may additionally
- discharge air (for) decelerating the package arriving at and/or in the further chamber of said further transit station; and/or
- suck air (for) decelerating the package after it has left said further chamber, preferably decelerating the package arriving at and/or in an arrival station;
or be configured or used or operated for this purpose, respectively.

By
- pulling a package from a sending station into the first chamber pneumatically or via (negative or low or underpressure or vacuum generated by) the first compressor, respectively;
- (then) switching the first compressor; and
- (then) pushing the package, preferably out of the first chamber, further in direction towards the arrival station(s) pneumatically or via (positive or high or overpressure generated by) the first compressor, respectively;
the single package can advantageously be transported fast, smooth, efficient and/or reliable.

By adding one or more further transit stations in line with the first transit station, said further transit station(s each)
- pulling the package from an upstream transit station, which in particular may be the first transit station, into the further chamber of said further transit station pneumatically or via (negative or low or underpressure or vacuum generated by) the further compressor of said further transit station, respectively;
- (then) switching said further compressor; and
- (then) pushing the package, preferably out of said further chamber, further in direction towards the arrival station(s) pneumatically or via (positive or high or overpressure generated by) said further compressor, respectively; advantageously two or more packages can be transported at the same time, thus increasing capacity and/or throughput.

The first transit station and the next downstream further transit station or further transit station next to said first transit station in flow direction, respectively, may cooperate or be integrally with one another, respectively, in that:
- either the first compressor pushes packages, preferably out of the first chamber, further in flow direction or in direction towards the further chamber of said further transit station pneumatically or via (positive or high or overpressure generated by) the first compressor, respectively, preferably into said further chamber;
- or the further compressor of said further transit station pulls the package in flow direction, preferably out of or from the first chamber, respectively, pneumatically or via (negative or low or underpressure or vacuum generated by) the further compressor of said further transit station, respectively, preferably out of the first chamber and/or into said further chamber;
or is/are configured or used or operated for this purpose, respectively.

Thereby a more compact and/or cheap(er) system may be realized.

On the other hand an embodiment where the first compressor selectively sucks air for pulling packages in flow direction, preferably into the first chamber, and discharges air for pushing packages further in flow direction or direction towards the (next downstream) further transit station, respectively, and thus in direction towards the arrival station(s) and the further compressor of said (next downstream) further transit station selectively sucks air for pulling packages in flow direction, preferably into the further chamber, and discharges air for pushing packages further in flow direction or in direction direction towards the arrival station(s), respectively, may advantageously increase flexibility, capacity, throughput and/or reliability.

By such transit stations the packages preferably may be decelerated at the station, preferably to a stop in its chamber, and then again accelerated which can provide a very reliable, efficient and/or smooth delivery system.

If the pneumatic delivery system comprises two or more arrival stations for (selectively) receiving packages from the passage system, according to an embodiment the passage system (further) comprises one or more switch(es) which selectively guide(s) packages (in direction) towards a selected arrival station of said arrival stations or is/are configured or used or operated for this purpose, respectively. Preferably said switch(es) is/are arranged between the (most downstream) further transit station and the arrival stations.

Thereby the pneumatic delivery system can provide packages to different or selected arrival stations, respectively, advantageously.

According to an embodiment the first chamber comprises a closable entrance gate. According to an embodiment the first chamber further comprises a closable exit gate which together with said closable entrance gate provides a lock function or is/are configured or used or operated for this purpose, respectively. According to an embodiment
- the open entrance gate and in an embodiment the closed exit gate permit(s) import of a package into said chamber in flow direction, in particular pulling said package into said chamber by means of the first compressor; and/or
- the closed entrance gate and in an embodiment the open exit gate permit(s) export of a package out of said chamber in flow direction, in particular pushing said package out of said chamber by means of the first compressor, preferably the switched or reversely operated first compressor, respectively;
or are configured or used or operated for this purpose, respectively. Accordingly, according to an embodiment the entrance gate and in an embodiment the exit gate of the first chamber are switched or operated selectively into
- an import state wherein the open entrance gate and in an embodiment the closed exit gate permit(s) import of a package into said chamber in flow direction; and
- an export state wherein the closed entrance gate and in an embodiment the open exit gate permit(s) export of a package out of said chamber in flow direction;
- preferably, (also) in a switch state wherein the closed entrance gate and in an embodiment the closed exit gate inhibit(s) import of a package into said chamber and/or export of a package out of said chamber;
or are configured or used or operated for this purpose, respectively.

Additionally or alternatively, according to an embodiment the further chambers each) comprise(s) a closable exit gate. According to an embodiment the further chamber of the or one or more of the further transit station(s), preferably the further transit station next downstream to the first transit station, (each) further comprise(s) a closable entrance gate which together with said closable exit gate provide a lock function or is/are configured or used or operated for this purpose, respectively. According to an embodiment
- the closed exit gate and in an embodiment the open entrance gate permit(s) import of a package into said chamber in flow direction, in particular pulling said package into said chamber by means of the further compressor of the further transit station; and
- the open exit gate and in an embodiment the closed entrance gate permit(s) export of a package out of said chamber in flow direction, in particular pushing said package out of said chamber by means of the further compressor of the further transit station, preferably the switched or reversely operated further compressor, respectively;
or are configured or used or operated for this purpose, respectively. Accordingly, according to an embodiment the exit gate and in an embodiment the entrance gate of the further chambers each) are switched or operated selectively into
- an import state wherein closed exit gate and in an embodiment the open entrance gate permit(s) import of a package into said chamber in flow direction; and
- an export state wherein the open exit gate and in an embodiment the closed ' entrance gate permit(s) export of a package out of said chamber in flow direction;
- preferably, (also) in a switch state wherein the closed exit gate and in an embodiment the closed entrance gate inhibit(s) import of a package into said chamber and/or export of a package out of said chamber;
or are configured or used or operated for this purpose, respectively.

Thereby, the respective compressor may advantageously be switched from sucking air into discharging air and switched back from discharging air into sucking air.

The closable exit gate of the first chamber may be the closable entrance gate of the (preferably next downstream) further chamber so that by opening and closing said common gate the first and further chamber transfer of packages from the first into the further chamber can be permitted or inhibited, respectively, or the first chamber, its entrance gate, the further chamber, its exit gate and their common gate form one lock. Thereby a more compact and/or cheap(er) system may be realized.

In an alternative embodiment the first chamber comprises the closable exit gate and the (preferably next downstream) further chamber comprises the closable entrance gate spaced apart from said closable exit gate of the first chamber downstream in flow direction so that the first chamber with its entrance and exit gate form a first lock and the further chamber with its entrance and exit gate form a further lock. Thereby advantageously flexibility, capacity, throughput and/or reliability may be increased

According to an embodiment the pneumatic delivery system comprises a controller which controls the first compressor and the further compressor(s) for selectively sucking air for pulling a package in flow direction and discharging air for pushing the package in flow direction, in particular to carry out a method described herein, or is configured or used or operated for this purpose, respectively. The controller can also control the switch(es) for selectively guiding packages (in direction) towards a selected arrival station and/or control the entrance gate and/or exit gate of the first and/or further chamber(s), preferably to close and/or open, respectively, or be configured or used or operated for this purpose, respectively.

According to an embodiment one or more packages of the pneumatic delivery system (each) comprise(s) a bag which bags a medical sample or is configured or used or operated for this purpose, respectively.

Additionally or alternatively, according to an embodiment the sending station(s) and/or arrival station(s) is/are placed in a laboratory and/or hospital, preferably a hospital('s) laboratory.

The present invention is particularly advantageous for such applications, in particular due to the requirements with regard to fast, smooth, hygienic and/or reliable transport, respectively, although not being limited to such applications.

As mentioned, a pneumatic delivery system, in particular its passage system, sending station(s), arrival station(s), transit stations and controller, preferably is/are carrying out a method described herein or is/are configured or used or operated for this purpose, respectively.

According to an aspect of the present invention a method for operating the pneumatic delivery system comprises the steps:
- registering that a first package is introduced into a first sending station of the pneumatic delivery system;
- preferably subsequently, operating the first compressor such that it sucks air so that said first package is pulled in flow direction, preferably is pulled out of the first sending station and/or into the first chamber, preferably through the open entrance gate of the first chamber and/or with the exit gate of the first chamber being closed;
- subsequently and preferably with the first package (still) in the first chamber and/or after the entrance gate of the first chamber is closed and/or the exit gate of the first chamber is opened:
   - operating the first compressor such that it discharges air so that said first package is pushed in flow direction, preferably through the open exit gate of the first chamber and/or with the entrance gate of the first chamber being closed, preferably is pushed out of the first chamber and/or (in direction) towards, preferably into, a further transit station, preferably the only further transit station or the next downstream further transit station; and/or
   - preferably at least partially together with and/or at least partially subsequently to said operating the first compressor to discharge air out of the first chamber for pushing the first package,
      operating the further compressor of said (only or next, respectively) further transit station such that it sucks air so that said first package is pulled in flow direction, preferably is pulled out of the first transit station and/or into the further chamber of said further transit station, preferably through the open entrance gate of said further chamber and/or with the exit gate of said further chamber being closed; and
- subsequently and preferably with the first package (still) in said further chamber and/or after the entrance gate of said further chamber is closed and/or the exit gate of said further chamber is opened, operating said further compressor such that it discharges air so that said first package is pushed in flow direction preferably out of said further chamber and/or (in direction) towards, preferably into, a first arrival station of the pneumatic delivery system.

According to an embodiment the method comprises the steps:
- registering that a second package is introduced into the first or another sending station of the pneumatic delivery system;
- after the first package has left the first chamber and before the first package is received in an arrival station of the pneumatic delivery system, in an embodiment after and/or (also) before the first package is received in a, preferably next, downstream further transit station of the pneumatic delivery system, operating the first compressor such that it sucks air so that said second package is pulled in flow direction, preferably is pulled out of the first or another sending station and/or into the first chamber, respectively, preferably through the open entrance gate of the first chamber and/or with the exit gate of the first chamber being closed;
- subsequently and preferably with the second package (still) in the first chamber and/or after the entrance gate of the first chamber is closed and/or the exit gate of the first chamber is opened:
   - operating the first compressor such that it discharges air so that said second package is pushed in flow direction, preferably through the open exit gate of the first chamber and/or with the entrance gate of the first chamber being closed, preferably is pushed out of the first chamber and/or (in direction) towards, preferably into, a further transit station, preferably the only further transit station or the next further transit station in flow direction; and/or
   - preferably at least partially together with and/or at least partially subsequently to said discharging out of the first chamber,
      operating the further compressor of said at least one further transit station such that it sucks air so that said second package is pulled in flow direction, preferably is pulled out of the first transit station and/or into said further chamber of said further transit station, preferably through the open entrance gate of said further chamber and/or with the exit gate of said further chamber being closed; and
- subsequently and preferably with the second package (still) in said further chamber and/or after the entrance gate of said further chamber is closed and/or the exit gate of said further chamber is opened, operating said further compressor for discharging air such that it discharges air so that said second package is pushed in flow direction preferably out of said further chamber and/or (in direction) towards, preferably into, the first or another arrival station of the pneumatic delivery system.

According to an embodiment the method comprises the steps:
- registering that a third package is introduced into the first sending station or another sending station of the pneumatic delivery system;
- after the second package has left out of the first chamber and/or before the first package is received in an arrival station of the pneumatic delivery system, operating the first compressor such that it sucks air so that said third package is pulled in flow direction, preferably is pulled out of the first or another sending station and/or into the first chamber, preferably through the open entrance gate of the first chamber and/or with the exit gate of the first chamber being closed;
- subsequently and preferably with the third package (still) in the first chamber and/or after the entrance gate of the first chamber is closed and/or the exit gate of the first chamber is opened,
   - operating the first compressor such that it discharges air so that said third package is pushed in flow direction, preferably through the open exit gate of the first chamber and/or with the entrance gate of the first chamber being closed, preferably is pushed out of the first chamber and/or (in direction) towards, preferably into, a further transit station, preferably the only further transit station or the next further transit station in flow direction; and/or
   - preferably at least partially together with and/or at least partially subsequently to said discharging out of the first chamber,
      operating the further compressor of said at least one further transit station such that it sucks air so that said third package is pulled in flow direction, preferably is pulled out of the first transit station and/or into said further chamber of said further transit station, preferably through the open entrance gate of said further chamber and/or with the exit gate of said further chamber being closed; and
- subsequently and preferably with the third package (still) in said further chamber and/or after the entrance gate of said further chamber is closed and/or the exit gate of said further chamber is opened, operating said further compressor such that it discharges air so that said third package is pushed in flow direction, preferably out of said further chamber and/or (in direction) towards, preferably into, the first or another arrival station of the pneumatic delivery system.

In one embodiment, one or more, in particular all, steps of the method are carried out completely or partially automatically, in particular by the system, preferably its controller.

According to an embodiment the method comprises the following sequence or the pneumatic delivery system is configured or used or operated for this purpose, respectively:

| | |
|---|---|
| Step A1: | with entrance gate of the first chamber open and exit gate of the first chamber closed, operate the first compressor for sucking air for pulling a first package in flow direction, preferably into the first chamber; |
| Step A2: | close the entrance gate of the first chamber and open the exit gate of the first chamber; |
| Step A3: | with the entrance gate of the further chamber open and the exit gate of the further chamber closed, operate the first compressor for discharging air for pushing the first package in flow direction, preferably out of the first chamber and/or into the further chamber, and/or operate the further compressor for sucking air for pulling the first package in flow direction, preferably out of the first chamber and/or into the further chamber; |
| Step A4: | close the entrance gate of the further chamber and open the exit gate of the further chamber; and |
| Step A5: | operate the further compressor for discharging air for pushing the first package in flow direction, preferably out of the further chamber. |

After the first package hast left the first chamber, the following sequence may be carried out:

| | |
|---|---|
| Step B1: | with entrance gate of the first chamber open(ed again) and exit gate of the first chamber closed (again), operate the first compressor for sucking air for pulling a second package in flow direction, preferably into the first chamber; |
| Step B2: | close the entrance gate of the first chamber and open the exit gate of the first chamber; |

| | |
|---|---|
| Step B3: | with the entrance gate of the further chamber open and the exit gate of the further chamber closed, operate the first compressor for discharging air for pushing the second package in flow direction, preferably out of the first chamber and/or into the further chamber, and/or operate the further compressor for sucking air for pulling the second package in flow direction, preferably out of the first chamber and/or into the further chamber; |
| Step B4: | close the entrance gate of the further chamber and open the exit gate of the further chamber; and |
| Step B5: | operate the further compressor for discharging air for pushing the second package in flow direction, preferably out of the further chamber. |

Step B1 preferably is carried out while the first package has not yet been received in its arrival station and/or at least partially in parallel with step A5.

(Operating) A compressor (for) sucking air for pulling a package and/or (for) discharging air for pushing a package may in particular comprise continuous(ly) operation/sucking/discharging, preferably with constant or varying pressure, which may smoothen the transport.

(Operating) A compressor (for) sucking air for pulling a package and/or (for) discharging air for pushing a package may in particular also comprise discrete, in particular intermittent(ly), operation/sucking/discharging, preferably with varying pressure, which may smoothen the transport.

Further advantages and features can be gathered from the dependent claims and the exemplary embodiments. Hereto it is shown, partly schematically, in:
- Fig. 1:: a pneumatic delivery system for transporting at least two packages at a time in a flow direction according to one embodiment of the present invention;
- Fig. 2:: part of the pneumatic delivery system in another state;
- Fig. 3:: part of the pneumatic delivery system in yet another state;
- Fig. 4:: part of the pneumatic delivery system in yet another state;
- Fig. 5:: part of the pneumatic delivery system in yet another state; and
- Fig. 6:: a part of a pneumatic delivery system according to another embodiment of the present invention.

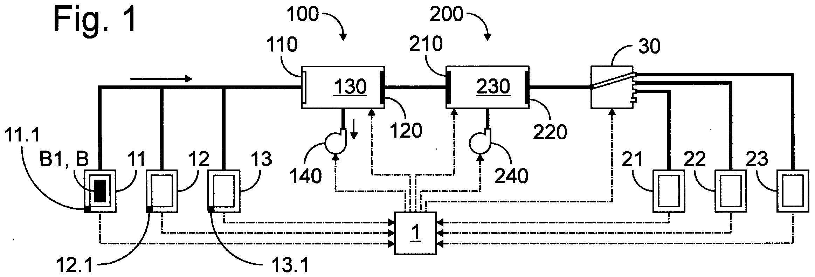

Fig. 1 shows a pneumatic delivery system for unidirectionally transporting at least two packages at a time in a flow direction according to one embodiment of the present invention.

The pneumatic delivery system comprises a plurality of sending stations 11, 12, 13 for introducing packages B1, B2 and a plurality of arrival stations 21, 22, 23 downstream of said sending stations 11, 12, 13 for receiving the packages from a passage system connecting said sending stations 11, 12, 13 and arrival stations 21, 22, 23. Sensor arrangements 11.1, 12.1 and 13.1 are provided to register a package being introduced into a sending station.

The passage system comprises a first transit station 100 connected to said sending stations 11, 12, 13, said first transit station 100 comprising a first chamber 130 for temporarily storing a package B1 or B2, respectively, and a first compressor 140 for selectively sucking air for pulling the package into the first chamber 130 and discharging air for pushing the package further (in direction) towards said arrival stations 21, 22, 23.

The first chamber comprises a closable entrance gate 110 and a closable exit gate 120 providing a lock function, wherein the open entrance gate and closed exit gate permit import of the package B1 or B2, respectively, into the first chamber 130 in flow direction. Vice versa the closed entrance gate 110 and open exit gate 120 permit export of the package B1 or B2, respectively, out of the first chamber 130 in flow direction.

The passage system comprises a further transit station 200 arranged in line with said first transit station 100 between the first transit station 100 and the arrival stations 21, 22, 23, said further transit station 200 comprising a further chamber 230 for temporarily storing the package B1 or B2, respectively, and a further compressor 240 for selectively sucking air for pulling the package B1 or B2, respectively, into said further chamber 230 and discharging air for pushing the package B1 or B2, respectively, further (in direction) towards said arrival stations 21, 22, 23.

Also the further chamber 230 comprises a closable entrance gate 210 spaced apart from the closable exit gate 120 of the first chamber downstream in flow direction and a closable exit gate 220 providing a lock function, wherein the open entrance gate 210 and closed exit gate 220 permit import of the package B1 or B2, respectively into said further chamber 230 in flow direction and the closed entrance gate 210 and open exit gate 220 permit export of the package out of said chamber 230 in flow direction.

The passage system further comprises a switch 30 for selectively guiding the package B1 or B2, respectively, (in direction) towards a selected arrival station of said at least two arrival stations, wherein said switch 30 is arranged between the further transit station 200 and the arrival stations 21, 22, 23.

The pneumatic delivery system further comprises a controller 1 for controlling the first compressor 140 and the further compressor 240 for selectively sucking air for pulling the packages B1, B2 in flow direction and discharging air for pushing the packages B1, B2 in flow direction, and for controlling the entrance gates 110, 210 and exit gates 120, 220 to open or close, respectively.

The pneumatic delivery system, in particular its controller 1, carries out a method for operating the pneumatic delivery system according to one embodiment of the present invention or is configured for this purpose, respectively.

In a first step of said method, a first package B1 is registered to be introduced into a first sending station 11, e.g. by sensor arrangement 11.1 or the like.

As illustrated in Fig. 1, in a subsequent step the first compressor 140 is operated by the controller 1 to suck air so that said first package B1 is pulled into the first chamber 130 with entrance gate 110 being open and exit gate 120 closed.

Subsequently, entrance gate 110 is closed and exit gate 120 is opened and then the first compressor 140 is operated to discharge air so that said first package B1 is pushed out of the first chamber in flow direction.

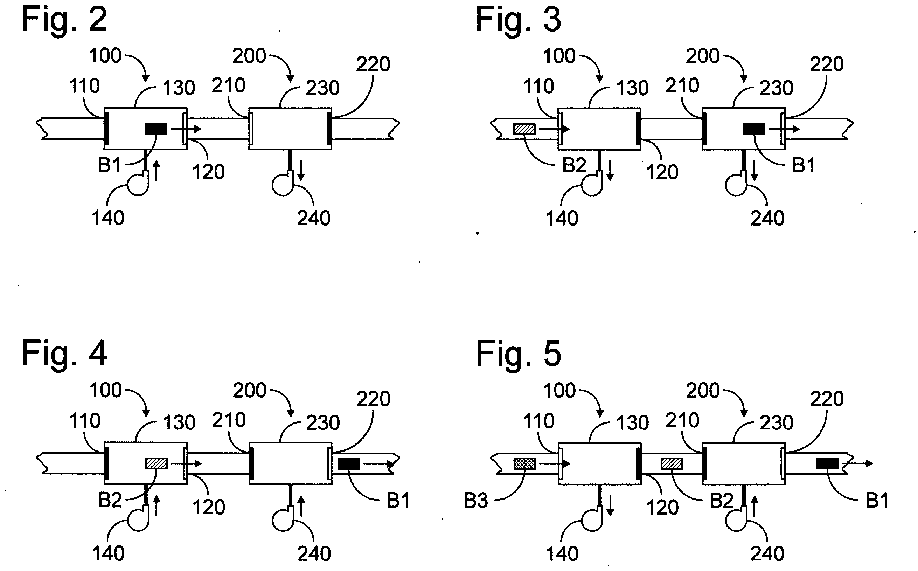

Alternatively to operating first compressor 140 to discharge air to push the first package B1 out of the first chamber or additionally, preferably at least partially in parallel to and/or at least partially subsequently, the further compressor 240 of the further transit station 200 is operated to suck air so that said first package B1 is now pulled into the further chamber 230 of the further transit station 200. In all of these variants, i.e. only the first compressor 140 pushing the first package B1 into the further chamber 230 or only the further compressor 240 pulling the first package B1 into the further chamber 230 or both compressors 140, 240 operating at least partially in parallel and/or at least partially subsequently, preferably entrance gate 210 is open and/or exit gate 220 is closed (see Fig. 2).

After the first package B1 has entered the further chamber 230, entrance gate 210 is closed and exit gate 220 is opened and then the further compressor 240 is operated to discharge air so that said first package B1 is pushed out of the further chamber 230 in flow direction into first arrival station 23 (see Figs. 3, 4).

After the first package B1 has left the first chamber 130 and already before it is received in one of the arrival stations 21, 22, 23, the first compressor 140 may again be operated such that it sucks air so that a second package B2, which has been (registered to be) introduced into the first sending station 11 or another one of the sending stations 12, 13 similar to the first step described above, is pulled into the first chamber 130 through the open entrance gate 110 of the first chamber with the exit gate 120 of the first chamber being closed (see Fig. 3).

Said second package B2 is handled similarly to the first package B1, i.e. pulled into the first chamber 130 first by the first compressor, then transferred to the second chamber 230 by the first compressor 140 and/or second compressor 240, and then pushed out of the further chamber 230 in flow direction into the first arrival station 23 or another of the arrival stations 21, 22 using switch 30.

Additionally, preferably still before the first package B1 is received in arrival station 23 and/or before the second package B2 is received in its arrival station 21, 22 or 23, a third package B3 may be handled similarly to the first and second package B1, B2, i.e. pulled into the first chamber 130 first by the first compressor 140, then transferred to the second chamber 230 by the first compressor 140 and/or second compressor 240, and then pushed out of the further chamber 230 in flow direction into the first arrival station 23 or another of the arrival stations 21, 22 using switch 30 (see Fig. 5). As illustrated in Fig. 5, while third package B3 is pulled into the first chamber 130 by the first compressor 140 and/or the first package B1 is pushed into first arrival station 23 by the further compressor 240, second package B2 may be in a transfer section of the passage system between ((exit gate 120 of) first chamber 130 of) first transit station 100 and ((entrance gate 210 of) further chamber 230 of) further transit station 200.

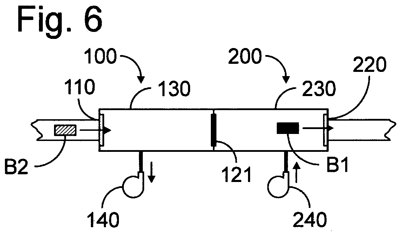

Fig. 6 shows a part of a pneumatic delivery system according to another embodiment of the present invention which corresponds to the embodiment described above with respect to Figs. 1-5 except that (first and further chamber 130, 230 of) first and further transit station 100, 200 are integrally and only one common closable gate 121 is provided which establishes the closable exit gate of the first chamber and the closable entrance gate of the further chamber.

In the present disclosure "comprises one/an X" in general does not imply an exclusive list but is a short form of "comprises at least one/an X" and also comprises "comprises two or more X"- Although exemplary embodiments have been discussed in the preceding description, it should be pointed out that a large number of modifications are possible. It should also be pointed out that the exemplary embodiments are only examples that are not intended to limit the scope of protection or the possible applications and structure of the invention in any way. Rather, the person skilled in the art is given a guide for the realisation of at least one exemplary embodiment by the preceding description, wherein various modifications, in particular with regard to the function and arrangement of the described components or features, may be realized without leaving the scope of protection as derived from the claims and features combinations equivalent thereto respectively.

For example, one ore more additional further transit stations may be arranged downstream of further transit station 200 of Fig. 1-5.

Additionally or alternatively, after the second package B2 has been pulled into the first chamber by the first compressor 140, with the entrance gate 210 of the further chamber 230 being closed so that the further compressor 240 can discharge air to push the first package B1 in direction towards the first arrival station 23, the entrance gate 110 of the first chamber 130 may be closed, the exit gate 120 of the first chamber 130 may be opened and the first compressor 140 may discharge air to push the second package B2 out of the first chamber 130 (see Fig. 4). Subsequently, the entrance gate 110 of the first chamber 130 may be opened again, the exit gate 120 of the first chamber 130 may be closed and the first compressor 140 may suck air for pulling the third package into the first chamber. While the exit gate 120 of the first chamber 130 is thus closed and after the second package B2 has left the further chamber 230, the entrance gate 210 of the further chamber 130 may be opened again, the exit gate 220 of the further chamber 230 may be closed again and the further compressor 240 may suck air for pulling the second package into the further chamber.

Packages B1, B2 and B3 each comprise a bag B as indicated in Fig. 1.

### Reference list

- 1: controller
- 11, 12, 13: sending station
- 11.1, 12.1, 13.1: sensor arrangement
- 21, 22, 23: arrival station
- 30: switch
- 100: first transit station
- 110: entrance gate
- 120: exit gate
- 121: closable gate
- 130: first chamber
- 140: first compressor
- 200: further transit station
- 210: entrance gate
- 220: exit gate
- 230: further chamber
- 240: further compressor
- B1, B2, B3: package
- B: bag

## Claims

1. A pneumatic delivery system for transporting at least one package (B1, B2, B3) in a flow direction, wherein the pneumatic delivery system comprises:
- a passage system;
- at least one sending station (11, 12, 13) for introducing the package;
- at least one arrival station (21, 22, 23) downstream of said at least one sending station for receiving the package from the passage system;
wherein the passage system connects said at least one sending station and said at least one arrival station;
wherein the passage system comprises a first transit station (100) connected to said at least one sending station, said first transit station comprising:
- a first chamber (130) for temporarily storing the package; and
- a first compressor (140) for sucking air for pulling the package in flow direction;
wherein the passage system comprises at least one further transit station (200) arranged between said first transit station and said at least one arrival station, said further transit station comprising:
- a further chamber (230) for temporarily storing the package; and
- a further compressor (240) for discharging air for pushing the package further in flow direction;
wherein:
- the first compressor is configured for selectively sucking air for pulling the package in flow direction and discharging air for pushing the package further in flow direction; and/or
- the further compressor is configured for selectively sucking air for pulling the package in flow direction and discharging air for pushing the package further in flow direction.

2. The pneumatic delivery system according to claim 1, wherein:
the pneumatic delivery system comprises at least two arrival stations for selectively receiving the package from the passage system; and
the passage system comprises at least one switch (30) for selectively guiding the package in direction towards a selected arrival station of said at least two arrival stations.

3. The pneumatic delivery system according to claim 2, wherein:
said switch is arranged between the further transit station and said at least two arrival stations.

4. The pneumatic delivery system according to any one of the preceding claims, wherein:
- the first chamber comprises a closable entrance gate (110) for importing the package into said chamber in flow direction; and
- the further chamber comprises a closable exit gate (220) for exporting the package out of said chamber in flow direction;
wherein:
- the first chamber comprises a closable exit gate (120) for exporting the package out of said chamber in flow direction; and/or
- the further chamber comprises a closable entrance gate (210) for importing the package into said chamber in flow direction.

5. The pneumatic delivery system according to claim 4, wherein:
- the first chamber comprises the closable exit gate; and
- the further chamber comprises the closable entrance gate spaced apart from said closable exit gate of the first chamber downstream in flow direction.

6. The pneumatic delivery system according to claim 4, wherein:
the closable exit gate of the first chamber is the closable entrance gate of the further chamber.

7. The pneumatic delivery system according to any one of the preceding claims, comprising:
a controller (1) for controlling the first compressor and the at least one further compressor for selectively sucking air for pulling the package in flow direction and discharging air for pushing the package in flow direction.

8. The pneumatic delivery system according to any one of the preceding claims, wherein:
at least one package of the pneumatic delivery system comprises a bag (B) for baging a medical sample; and/or
the at least one sending station and/or the at least one arrival station is placed in a laboratory and/or hospital; and/or
the system is configured for carrying out a method according to any one of the subsequent claims.

9. A method for operating the pneumatic delivery system according to any one of the preceding claims, the method comprising:
- registering a first package (B1) being introduced into a first sending station of the pneumatic delivery system;
- operating the first compressor for sucking air for pulling said first package in flow direction;
the method further comprising:
subsequently after pulling the first package into the first chamber:
- operating the first compressor for discharging air for pushing the first package in flow direction; and/or
- operating the further compressor for sucking air for pulling the first package in flow direction;
the method further comprising:
- subsequently operating the further compressor for discharging air for pushing the first package in flow direction.

10. The method according to claim 9, the method comprising the steps:
- registering a second package (B2) being introduced into the first or another sending station of the pneumatic delivery system;
- after the first package has left the first chamber and before the first package is received in an arrival station of the pneumatic delivery system, operating the first compressor for sucking air for pulling the second package in flow direction;
the method further comprising:
- subsequently after pulling the second package into the first chamber:
- operating the first compressor for discharging air for pushing the second package in flow direction; and/or
- operating the further compressor for sucking air for pulling the second package in flow direction;
the method further comprising:
- subsequently operating the further compressor for discharging air for pushing the second package in flow direction.

11. The method according to claim 10, the method comprising the steps:
- registering a third package (B3) being introduced into the first or another sending station of the pneumatic delivery system;
- after the second package has left the first chamber and/or before the first package is received in an arrival station of the pneumatic delivery system, operating the first compressor for sucking air for pulling the third package in flow direction;
the method further comprising:
subsequently after pulling the third package into the first chamber:
- operating the first compressor for discharging air for pushing the third package in flow direction; and/or
- operating the further compressor for sucking air for pulling the third package in flow direction;
the method further comprising:
- subsequently operating the further compressor for discharging air for pushing the third package in flow direction.
